# EUROPEAN PATENT APPLICATION

(11) **EP 4 207 049 A1**
(43) Date of publication of application: **05.07.2023**
(21) Application number: 21941654.2
(22) Date of filing: 29.10.2021
(51) Int. Cl.: G06T 3/00

(54) **IMAGE PROCESSING METHOD AND APPARATUS, AND DEVICE, STORAGE MEDIUM, PROGRAM PRODUCT AND PROGRAM**

(30) Priority: 14.05.2021 CN 202110527077
(71) Applicant: Beijing Sensetime Technology Development Co., Ltd., Haidian Beijing 100080 (CN)
(72) Inventor: LI, Siying, Beijing 100080 (CN); CHEN, Zukai, Beijing 100080 (CN); WANG, Quan, Beijing 100080 (CN); QIAN, Chen, Beijing 100080 (CN)
(74) Representative: Lavoix
(86) International application number: PCT/CN2021/127480
(87) International publication number: WO 2022/237089

(57) **Abstract**

An image processing method and apparatus, and a device and a computer storage medium. The method comprises: on the basis of an image to be processed, determining a pixel position of a target part, and a pixel position of a blocked region in the target part; on the basis of the pixel position of the target part and the pixel position of the blocked region in the target part, determining a pixel position of an unblocked region in the target part; and on the basis of the pixel position of the unblocked region in the target part, performing rendering processing on the unblocked region.

## Description

### CROSS-REFERENCE TO RELATED APPLICATION

This application claims priority to Chinese Patent Application No. 202110527077.4., filed on May 14, 2021 and entitled "METHOD, APPARATUS AND DEVICE FOR IMAGE PROCESSING, COMPUTER STORAGE MEDIUM", the disclosure of which is hereby incorporated by reference in its entirety.

### TECHNICAL FIELD

The embodiments of the present disclosure relates but are not limited, to the technical field of image processing, and in particular to a method, apparatus and device for image processing, a storage medium, a program product, and a product.

### BACKGROUND

With the popularization and application of photographic techniques, shooting images or videos by using devices has become one of the important means to record lives in daily life of people. In order to improve the aesthetic sense of the images or videos, certain parts of the people in the images or videos need to be rendered. For example, beautifying special effect processing may be performed on face parts in the images and/or body parts in the images.

In a related art, when a certain part is rendered, if the part is occluded, for example, if a certain part is occluded by an occlusion, the rendering performed on the part is displayed on the occlusion, which results in an unnatural beautifying effect.

### SUMMARY

The embodiments of the disclosure provide a method, an apparatus and a device for image processing, a storage medium, a program product and a program.

A first aspect provides a method for image processing, which includes operations as follows. A pixel position of a target part and a pixel position of an occluded area in the target part are determined based on an image to be processed. A pixel position of a non-occluded area in the target part is determined based on the pixel position of the target part and the pixel position of the occluded area in the target part. Rendering processing is performed on the non-occluded area based on the pixel position of the non-occluded area in the target part.

In some embodiments, the operation that the pixel position of the target part is determined based on an image to be processed may include operations as follows. Key point detection is performed on the image to be processed to obtain key point information of the target part. The pixel position of the target part is determined based on the key point information of the target part.

In this way, since the pixel position of the target part is determined based on key point information of the target part, the pixel position of the target part includes a pixel position of a visible part and a pixel position of an invisible part in the target part. The pixel position of the invisible part in the target part is the pixel position of the occluded area in the target part, and the pixel position of the occluded area in the target part can be removed from the pixel position of the target part to obtain the pixel position of the non-occluded area in the target part, and the pixel position of the non-occluded area in the target part is the pixel position of the visible part in the target part.

In some embodiments, the operation that the pixel position of the occluded area in the target part is determined based on an image to be processed may include an operation that the pixel position of the occluded area in the target part is determined based on an image segmentation model and the image to be processed.

In this way, the pixel position of the occluded area in the target part is determined based on the image segmentation model, and the determined pixel position of the occluded area in the target part is more accurate.

In some embodiments, the operation that the pixel position of the occluded area in the target part is determined based on the image segmentation model and the image to be processed may include operations as follows. A segmentation image including the target part is determined based on the image to be processed. A target image inputted into the image segmentation model is determined based on the segmentation image. The target image is processed by using the image segmentation model, to obtain an output image. The pixel position of the occluded area in the target part is determined based on the output image.

Therefore, the segmentation image obtained by segmenting the image to be processed includes a target object, so a proportion of the target part in the segmentation image is less than a proportion of the target part in the image to be processed, so that the proportion of the target part in the target image that is inputted into the image segmentation model and is determined based on the segmentation image is less than the proportion of the target part in the image to be processed. In this way, the image segmentation model do not need to process an image feature other than a feature of the segmentation image, thereby avoiding the interference caused by the image feature other than the feature of the segmentation image, and improving the accuracy of an output image outputted by the image segmentation model, reducing the calculation amount of the output image obtained by using the image segmentation model, and improving the efficiency of detecting the pixel position of the occluded area in the target part.

In some embodiments, the operation that the segmentation image including the target part is determined based on the image to be processed may include operations as follow. An affine-transformed image is determined based on the image to be processed and an affine transformation matrix. The affine-transformed image is segmented to obtain the segmentation image. The operation that the pixel position of the occluded area in the target part is determined based on the output image may include an operation as follows. The pixel position of the occluded area in the target part is determined based on the output image and the affine transformation matrix.

In this way, the affine-transformed image is first obtained through the affine transformation matrix and the image to be processed, and then the segmentation image is determined based on the affine-transformed image, so that the segmentation image maintains the straightness and the parallelism of the image to be processed. The size of the segmentation image can conform to the input of the image segmentation model. The target image determined based on the segmentation image is processed through the image segmentation model, to obtain the output image which characterizes the occluded area in the target part accurately, and then the pixel position of the occluded area in the target part of the image to be processed is obtained accurately through the output image and the affine transformation matrix.

In some embodiments, the output image may include: a target matrix having the same number of rows and the same number of columns as the pixels of the target image or the segmentation image. An element value of each element in the target matrix characterizes a probability that a pixel corresponding to the element belongs to the target part or a non-target part. The operation that the pixel position of the occluded area in the target part is determined based on the output image may include operations. The element value of each element in the target matrix is determined as the element value corresponding to each pixel in the segmentation image. The pixel position of the occluded area in the target part is determined based on the element value corresponding to each pixel in the segmentation image and the affine transformation matrix.

In this way, whether each pixel of a local image, corresponding to the segmentation image, in the image to be processed is a pixel of the occluded area can be obtained based on the element value corresponding to each pixel in the segmentation image and the affine transformation matrix. Each pixel position of the non-occluded area is accurately determined based on each pixel position of the target part and each pixel position of the occluded area, and rendering processing is performed on the non-occluded area accurately. Therefore, the rendering of the target part is natural.

In some embodiments, the operation that the pixel position of the occluded area in the target part is determined based on the element value corresponding to each pixel in the segmentation image and the affine transformation matrix may include operations as follows. The element value corresponding to each pixel in a local image, including the target part, corresponding to the segmentation image in the image to be processed is determined based on the element value corresponding to each pixel in the segmentation image and the affine transformation matrix. The pixel position of the occluded area in the target part is determined based on the element value corresponding to each pixel in the local image.

In this way, the element value corresponding to each pixel in a local image corresponding to the segmentation image in the image to be processed can be inversely calculated based on the element value corresponding to each pixel in the segmentation image and the affine transformation matrix, and then the pixel position of the occluded area in the target part may be determined based on the element value corresponding to each pixel in the local image, so that a manner of quickly determining the pixel position of the occluded area in the target part is provided.

In some embodiments, the operation that the pixel position of the occluded area in the target part is determined based on the element value corresponding to each pixel in the local image may include operations as follows. A target element value meeting a first threshold value condition is determined from the element value corresponding to each pixel in the local image at the pixel position of the target part. A pixel position of a second specified pixel in the image to be processed is determined. The second specified pixel corresponds to a first specified pixel in the local image. The pixel position of the occluded area in the target part is determined based on the pixel position of the target element value corresponding to the local image and the pixel position of the second specified pixel.

In this way, the pixel position of the occluded area in the target part in the image to be processed is determined based on the pixel position of the occluded area of the target part on the local image and the determined pixel position of the second specified pixel in the image to be processed, and the second specified pixel corresponds to the first specified pixel in the local image. Therefore, only a determination result of determining whether each pixel in the local image belongs to the target part is transferred and processed, thereby reducing the time consumption of transferring and processing the determination result.

In some embodiments, the operation that the pixel position of the occluded area in the target part is determined based on the element value corresponding to each pixel in the local image may include operations as follows. The element value corresponding to each pixel in a specified area other than the local image in the image to be processed is determined. A specified element value meeting the first threshold value condition is determined from the element value corresponding to each pixel in the specified area and the element value in each pixel in the local image at the pixel position of the target part. The pixel position of the occluded area in the target part is determined based on the pixel position of the specified element value corresponding to the image to be processed.

In this way, the element value corresponding to each pixel in the specified area other than the local image in the image to be processed is determined, and the element value corresponding to each pixel of the image to be processed can be obtained, and then the pixel position of the occluded area in the target part in the image to be processed may be determined based on the element value corresponding to each pixel of the image to be processed. Thus, the pixel position of the occluded area in the target part can be accurately determined.

In some embodiments, the method may further include operations as follows. The element value corresponding to each pixel at the pixel position of the target part is determined based on the output image. The operation that the pixel position of the non-occluded area in the target part is determined based on the pixel position of the target part and the pixel position of the occluded area in the target part may include operations as follows. A candidate element value meeting a second threshold value condition is determined in the element value corresponding to each pixel at the pixel position of the target part. A pixel position corresponding to the candidate element value is determined as a pixel position of a transition area. The pixel position of the non-occluded area in the target part is determined based on the pixel position of the occluded area in the target part and the pixel position of the transition area.

In this way, the pixel position of the transition area may be determined first, and the element value corresponding to each pixel in the transition area characterizes that the pixel may belong to the target part or belong to the non-target part, and the pixel position of the non-occluded area in the target part determined based on the pixel position of the occluded area in the target part and the pixel position of the transition area can effectively avoids from determining certain pixels in the transition area as the pixels in the non-occluded area, thereby accurately determining the pixel position of the non-occluded area in the target part.

In some embodiments, the method may further include an operation. Smoothing processing is performed on the transition area based on the pixel position of the transition area.

In this way, since the element value corresponding to each pixel in the transition area characterizes that each pixel may belong to the target part or belong to the non-target part, the transition between the occluded area and the non-occluded area is natural by performing smoothing processing on the transition area, and the accuracy and the naturalness of processing the image to be processed can be improved.

In some embodiments, the image segmentation model may be obtained by training a training sample set and a target sample set. The training sample set may include a plurality of training sample images. At least one part of each training sample image is occluded. The target sample set may include a plurality of target sample images. Each of the target sample images may include a mask of a non-occluded area in the part.

In this way, the image segmentation model is obtained by training with taking the plurality of training sample images as a training input and taking the plurality of target sample images as a training target, a subsequently inputted target image may be processed through the image segmentation model, and then the pixel position of the non-occluded area in the target part is obtained. Therefore, the pixel position of the non-occluded area in the target part may be automatically obtained by a device for image processing, thereby saving the labor is saved, and improving the accuracy of the determined pixel position of the non-occluded area in the target part.

In some embodiments, the training sample set may be obtained by randomly occluding an occlusion of each occlusion image in an occlusion image set on at least one non-occluded part of each segmentation image in a segmentation image set. The target sample set may be determined based on a position of the occlusion in each occlusion image relative to the at least one non-occluded part.

In this way, the occlusion in each occlusion image is randomly occluded on the at least one non-occluded part to obtain the training sample set, and one occlusion can occlude different positions of the part to obtain different training sample images. A plurality of training samples can be combined by one occlusion and one part, and then a large number of training samples can be determined based on a small number of segmentation images and a small number of occlusion images. Therefore, the performance of the image segmentation model obtained by training is high, and the accuracy of the determined position pixel of the non-occluded area in the target part is high.

In some embodiments, the target sample set may be determined based on the non-occluded area in the at least one part of each of the training sample images. The non-occluded area in the at least one part of each of the training sample images may be determined based on an occlusion area of each of the training sample images and the key point information of the at least one part in each of the training sample images.

In this way, the area of at least one part of each training sample image may be determined based on the key point information of the at least one part in each training sample image, then the non-occluded area in the at least one part may be obtained based on the area of the at least one part and the determined occlusion area of each training sample image. The target sample set is determined based on the non-occluded area in the at least one part, and the target sample set is determined based on the obtained training sample with at least one occluded part. Since the training sample is a directly obtained sample in which at least one part is occluded, the training sample set and the target sample set are easily obtained, and the obtained training sample set and the target sample set conform to a real scenario.

A second aspect provides an apparatus for image processing, which includes a first determination unit, a second determination unit and a rendering unit. The first determination unit is configured to determine a pixel position of a target part and a pixel position of an occluded area in the target part based on an image to be processed. The second determination unit is configured to determine a pixel position of a target part and a pixel position of an occluded area in the target part based on an image to be processed. The rendering unit is configured to perform rendering processing on the non-occluded area based on the pixel position of the non-occluded area in the target part.

A third aspect provides a device for image processing, which includes a memory and a processor. The memory stores a computer program capable of running in the processor. The processor implements the operations in the abovementioned method when executing the computer program.

A fourth aspect provides a computer storage medium. The computer storage medium stores one or more programs, and the one or more programs are executed by one or more processors, to implement the operations in the abovementioned method.

A fifth aspect provides a computer program product. The computer program product carries a program code containing instructions, which are configured to execute the operations in the abovementioned method.

A sixth aspect provides a computer program, which includes a computer-readable code. A processor in the device for image processing executes the operations in the abovementioned method when the computer-readable code runs in the device for image processing.

In the embodiments of the disclosure, the pixel position of the non-occluded area in the target part is determined based on the pixel position of the target part and the pixel position of the occluded area in the target part, and the position of the non-occluded area in the target part can be determined accurately by determining the pixel position of the non-occluded area in each pixel of the target part, so that the image obtained by performing the rendering processing on the non-occluded area has high accuracy and naturalness. In addition, the pixel position of the non-occluded area in the target part is determined first, and then the rendering processing is performed on the non-occluded area. In this way, only the non-occluded area is rendered, and the areas other than the non-occluded area are not rendered. Therefore, the rendering area is small, thereby improving the efficiency of rendering the non-occluded area in the target part.

In order to make the above purposes, features, and advantages of the disclosure clearer and easier to understand, preferred embodiments are listed hereinafter and are described in detailed in combination with the drawings.

### DETAILED DESCRIPTION

For describing the technical solutions of the embodiments of the disclosure more clearly, the drawings required to be used in the embodiments are simply introduced below. The drawings, which are incorporated in and constitute a part of this specification, illustrate embodiments consistent with the disclosure and, together with the specification, serve to explain the technical solutions of the disclosure.
FIG. 1 is an implementation flowchart of a method for image processing according to an embodiment of the disclosure.
FIG. 2 is a schematic diagram of an area of a target part and an occluded area of a target part according to an embodiment of the disclosure.
FIG. 3 is an implementation flowchart of another method for image processing according to an embodiment of the disclosure.
FIG. 4 is an implementation flowchart of another method for image processing according to an embodiment of the disclosure.
FIG. 5 is an implementation flowchart of another method for image processing according to an embodiment of the disclosure.
FIG. 6 is an implementation flowchart of a method for image processing according to another embodiment of the disclosure.
FIG. 7 is an implementation flowchart of a method for image processing according to another embodiment of the disclosure.
FIG. 8 is an implementation flowchart of a method for determining an image segmentation model according to an embodiment of the disclosure.
FIG. 9 is an implementation flowchart of another method for determining an image segmentation model according to an embodiment of the disclosure.
FIG. 10 is a flowchart of determining a training sample image and a target sample image according to an embodiment of the disclosure.
FIG. 11 is an implementation flowchart of a method for determining an image segmentation model according to an embodiment of the disclosure.
FIG. 12 is another flowchart of determining a training sample image and a target sample image according to an embodiment of the disclosure.
FIG. 13 is a schematic structural diagram of a composition of an apparatus for image processing according to an embodiment of the disclosure.
FIG. 14 is a schematic diagram of a hardware entity of a device for image processing according to an embodiment of the disclosure.

### DETAILED DESCRIPTION

The technical solutions of the disclosure are described below in detail by the embodiments with reference to accompanying drawings. The following specific embodiments may be combined. The same or similar concepts or processes will not be elaborated in some embodiments.

It is to be noted that, in the embodiments of the disclosure, "first", "second" and the like are for distinguishing similar objects and not intended to describe a specific sequence or order. "A plurality of" in the embodiments of the disclosure may refer to at least two without special description.

In addition, the technical solutions in the embodiments of the disclosure may be freely combined without conflicts.

On the premise that requirements of a user for the reality of beautifying special effects are gradually increasing, the stability and naturalness of special effects when a face is partially occluded are becoming more and more important.

In a related art, whether a part in an image is occluded is determined through a key point detection solution. For example, a device for image processing may determine whether each key point is occluded according to a plurality of key points of the part in the image, and then determine whether the part is completely occluded based on the proportion of the key points in the part which are occluded. This mode is effective for determining whether the part (for example, a lip) is completely occluded.

However, in an actual scenario, a part is often occluded partially rather than completely. In a case where a certain part is occluded partially, the device for image processing cannot locate an occlusion range of the part accurately. Then, when rendering processing is performed on the part, since it is impossible to obtain whether each pixel in the part is occluded or not, an occlusion occluding the part may be easily rendered, or a non-occluded area in the part may not rendered, which results in low accuracy of a rendering range, and an unnatural rendering effect.

In the embodiment of the disclosure, an occlusion mask corresponding to a target image is determined through an image segmentation model and the target image, and key point information of a target part is combined to achieve a real beautifying effect.

The occlusion mask may be used to distinguish a non-occluded area in the target part from other areas other than the non-occluded area in the target part. The non-occluded area in the target part is a visible area in the target part. Other areas other than the non-occluded area in the target part may include an invisible area (that is an occluded area in the target part) in the target part. Both occluded area in the target part and the non-occluded area in the target part belong to an area of the target part.

In some implementation modes, the occlusion mask may be a target matrix having same numbers of rows and columns as the pixels of the target image. For the description of the target matrix, reference is made to the description of the following embodiments.

The occlusion may include body parts, such as a finger, a hand or an arm. Alternatively, the occlusion includes objects, such as a water glass and a plant, which is not limited in the embodiments of the disclosure.

The target part in the embodiments of the disclosure may refer to one part or at least two parts. For example, the target part may be a facial part, and the facial part may include facial organs. For another example, the target part may be a non-facial part, and the non-facial part may include a certain part on hands, feet, limbs or trunk. In some implementation modes, the target part may include one of an eyebrow, an eye, a nose, a mouth, a facial contour, an eyelid, a cheekbone, a human middle part, a finger, a toe, a nail, a waist and the like. This is not limited in the embodiments of the disclosure.

It is to be noted that the target part in the embodiments of the disclosure may be a part on a human body. In some other embodiments, the target part may be a part on a non-human body. For example, the non-human body is an animal, such as a cat or a dog.

The device for image processing in the embodiments of the disclosure may include at least one or a combination of at least two of a server, a mobile phone, a pad, a computer with a wireless transceiving function, a palm computer, a desk computer, a personal digital assistant, a portable media player, a smart speaker, a navigation apparatus, a smart watch, smart glasses, a smart necklace and other wearable devices, a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a vehicle, an on-board device and an on-board module in an Internet of vehicles system, and the like.

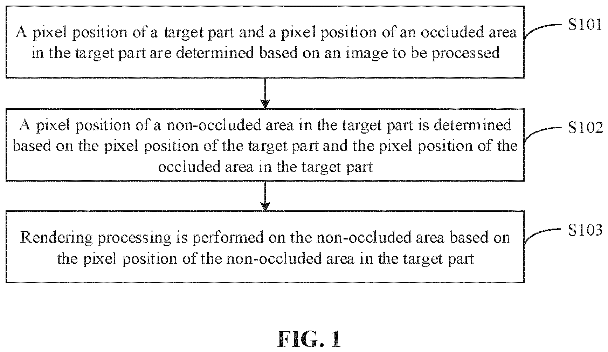

FIG. 1 is an implementation flowchart of a method for image processing according to an embodiment of the disclosure. The method is applied to the device for image processing. The method includes the following operations S101 to S 103.

At S101, a pixel position of a target part and a pixel position of an occluded area in the target part are determined based on an image to be processed.

The image to be processed may be an image to be rendered, and the image to be processed may include a face image. In some implementation, a ratio of the area occupied by a face in the image to be processed to the total area of the image to be processed may be greater than a certain set value. In some implementation, the image to be processed may be an image shot by a camera in the device for image processing. In some other implementation, the image to be processed may be an image downloaded by the device for image processing. In some other embodiments, the image to be processed may be an image frame in a shot or downloaded video.

The image to be processed may include a target part and an occlusion occluding the target part. The occlusion may partially occlude the target part.

The pixel position of the target part may include a pixel position of a visible target part and a pixel position of an invisible target part (that is, the pixel position of an occluded area in the target part).

The pixel position of the target part may be a pixel position of an edge pixel of the target part, or may be a pixel position of each pixel in the target part. The pixel position of the occluded area in the target part may include the pixel position of the edge pixel of the occluded area in the target part, or may include the pixel position of each pixel in the occluded area in the target part.

In some implementation, the operation that a pixel position of a target part is determined based on an image to be processed may include operation as follows. Key point detection is performed on the image to be processed to obtain key point information of the target part. The pixel position of the target part is determined based on the key point information of the target part.

In some implementation, the operation that a pixel position of an occluded area in the target part is determined based on an image to be processed may include operations as follows. The image to be processed is inputted into an image segmentation model, and the pixel position of the occluded area in the target part is outputted through the image segmentation model.

At S102, a pixel position of a non-occluded area in the target part is determined based on the pixel position of the target part and the pixel position of the occluded area in the target part.

In some implementation, the device for image processing may determine a pixel position, other than the pixel position of the occluded area in the target part, of the pixel positions of the target part as the pixel position of the non-occluded area in the target part.

In some other implementation, the device for image processing may determine a transition area. The difference between a probability that each pixel in the transition area belongs to the target part and a probability that the pixel in the transition area belongs to a non-target part is less than a preset value. The pixel position, other than the pixel position of the occluded area in the target part and the pixel position of the transition area, of the pixel positions of the target part is determined as the pixel position of the non-occluded area in the target part.

The pixel position of the non-occluded area in the target part may include the pixel position of the edge pixel of the non-occluded area in the target part, or may include a pixel position of each pixel in the non-occluded area in the target part.

At S103, rendering processing is performed on the non-occluded area based on the pixel position of the non-occluded area in the target part.

The device for image processing may obtain an accurate position of the non-occluded area in the target part based on the pixel position of the non-occluded area in the target part, so that accurate rendering processing may be performed on the non-occluded area. The rendering processing may be called special effect processing or beatifying special effect processing in some other implementation.

The operation that the rendering processing is performed on the non-occluded area in the target part may include at least one of the following: performing lipstick rendering on a non-occluded area of the mouth; performing eyebrow rendering on a non-occluded area of the eyebrow; performing eye shadow rendering on a non-occluded area of an eyelid; and performing blush rendering on a non-occluded area of a cheek; or other rendering that can be used for face beautifying, which is not be enumerated in the embodiments of the disclosure.

In some implementation, the device for image processing may determine attribute information of the target part, and perform the rendering processing on the non-occluded area of the target part based on the attribute information of the target part. The attribute information may include at least one of name, size, color, shape and the like. In an implementation, the device for image processing may determine a rendering style corresponding to the non-occluded area of the target part based on the attribute information of the target part, and then perform the rendering processing on the non-occluded area of the target part based on the rendering style. For example, the device for image processing may perform light color rendering or lip biting makeup rendering on the non-occluded area of the mouth in a case where it is determined that the name of the target part is the mouth and the shape of the mouth is thick.

In some implementation, a display screen of the device for image processing may display multiple rendering styles. The device for image processing may perform the rendering processing on the non-occluded area in a target rendering style in response to an operation of a user on the target rendering style of multiple rendering styles.

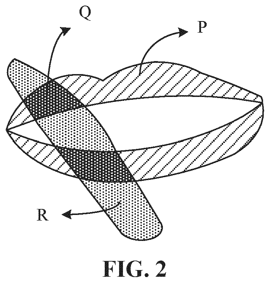

FIG. 2 is a schematic diagram of an area of the target part and an occluded area of a target part according to an embodiment of the disclosure. The target part shown in FIG. 2 is a mouth. As shown in FIG. 2, the area of the target part and the occluded area of the target part in FIG. 2 may be applied to an image to be processed, a segmentation image, an affine-transformed image, a local image or a target image mentioned in any embodiment of the disclosure.

Taking the mouth as an example of the target part, the area of the target part in the image to be processed may be a combination of an area P and an area Q. A pixel position of the target part may be a pixel position of each pixel in the area P and the area Q or a pixel position of each pixel in edge pixels of an area obtained by combing the area P and the area Q.

The occlusion area may be a combination of an area Q and an area R. The occluded area of the target part may be the area Q. The pixel position of the occluded area of the target part may be a pixel position of each pixel in the area Q or a pixel position at the edge of the area Q.

In the embodiments of the disclosure, the pixel position of the non-occluded area in the target part is determined based on the pixel position of the target part and the pixel position of the occluded area in the target part, and the position of the non-occluded area in the target part can be determined accurately by determining the pixel position of the non-occluded area in each pixel of the target part, so that the accuracy and the naturalness of the image obtained by performing the rendering processing on the non-occluded area are high. In addition, the pixel position of the non-occluded area in the target part is determined first, and then the rendering processing is performed on the non-occluded area. In this way, only the non-occluded area is rendered, and the other areas other than the non-occluded area are not rendered. Therefore, the rendering area is small, thereby improving the efficiency of rendering the non-occluded area in the target part.

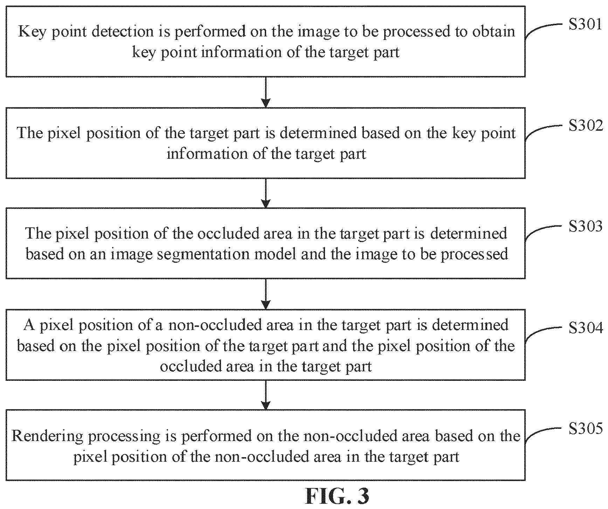

FIG. 3 is an implementation flowchart of another method for image processing according to an embodiment of the disclosure. As shown in FIG. 3, the method is applied to the device for image processing. The method includes the following operations S301 to S305.

At S301, key point detection is performed on an image to be processed to obtain key point information of a target part.

The operation that the key point detection is performed on the image to be processed may include operations as follows. The positions of various parts (including the target part) are determined based on the image to be processed. Various parts may include at least one of an eyebrow, an eye, a nose, a mouth, a facial contour and the like. The operation that key point detection is performed on the image to be processed includes an operation as follows. Key point detection is performed on the target part in the image to be processed. The key point information in the embodiments of the disclosure may be key point coordinate information. The key point coordinate information may be the key point two-dimensional coordinate information or the key point three-dimensional coordinate information.

The key point information of the target part may include key point information of 81 points, 106 points, and 1000 points, to locate the target part through the key point information of the 81 points, the 106 points, and the 1000 points.

At S302, a pixel position of the target part is determined based on the key point information of the target part.

At S303, a pixel position of an occluded area in the target part is determined based on an image segmentation model and the image to be processed.

In some implementation, an output image may be determined based on the image segmentation model and the image to be processed. The pixel position of the occluded area in the target part is determined based on the output image. For example, a target image inputted into the image segmentation model may be determined based on the image to be processed. Then, the target image is processed by using the image segmentation model, to obtain an output image, and the pixel position of the occluded area in the target part is determined based on the output image.

In some implementation, the image segmentation model may include a semantic segmentation model. The semantic segmentation model may be called a semantic segmentation network. The semantic segmentation network may include one of a Deeplab v3 network, a Fully Convolution Network (FCN), a SegNet, a U-Net, a DeepLab v1 network, a DeepLab v2 network, a Fully Convolutional DenseNet, an E-Net, a Link-Net, a Mask R-CNN, a Pyramid Scene Parsing Network (PSPNet), a RefineNet, and a Gated Feedback Refinement Network (G-FRNet). In some other implementation, the image segmentation model may include an instance segmentation model or a panoptic segmentation model.

In some other implementation, the image to be processed may be inputted into the image segmentation model, and the image segmentation model processes the image to be processed to obtain an output image corresponding to the image to be processed, the pixel position of the occluded area in the target part is determined based on the output image corresponding to the image to be processed.

In some other implementation, at least one type of processing of segmentation, color transformation, normalized transformation and affine transformation may be performed on the image to be processed to obtain the target image. Then, the target image is inputted into the image segmentation model, and the image segmentation model performs processing on the target image to output the output image corresponding to the target image, and the pixel position of the occluded area in the target part is determined based on the output image corresponding to the target image. The operation that color transformation is performed on the image to be processed may include an operation that graying or grayscale transformation is performed on the image to be processed to obtain a gray image.

Several modes of determining a target image are described below. For example, segmentation processing is performed on the image to be processed to obtain the target image. For another example, affine transformation processing may be performed on the image to be processed to obtain an affine-transformed image, and segmentation is performed on the affine-transformed image to obtain the target image. For another example, the image to be processed is segmented, and the color transformation and/or the normalized transformation is performed on the segmentation image, to obtain the target image. In some embodiments of the disclosure, the device for image processing may perform affine transformation processing on the image to be processed to obtain an affine-transformed image, the affine-transformed image is segmented to obtain a segmentation image, and then color transformation and normalized transformation are respectively performed on the segmentation image to obtain the target image. It can be understood that the target image may be obtained based on the image to be processed in other manners, which is not be enumerated in the embodiments of the disclosure.

At S304, a pixel position of a non-occluded area in the target part is determined based on the pixel position of the target part and the pixel position of the occluded area in the target part.

At S305, rendering processing is performed on the non-occluded area based on the pixel position of the non-occluded area in the target part.

In the embodiments of the disclosure, since the pixel position of the target part is determined based on the key point information of the target part, the pixel position of the target part includes a pixel position of a visible part and a pixel position of an invisible part in the target part. The pixel position of the invisible part in the target part is the pixel position of the occluded area in the target part. Therefore, the pixel position of the occluded area in the target part can be removed from the pixel position of the target part to obtain the pixel position of the non-occluded area in the target part, and the pixel position of the non-occluded area in the target part is the pixel position of the visible part in the target part.

In the embodiments of the disclosure, the pixel position of the occluded area in the target part is determined based on the image segmentation model, so that the determined pixel position of the non-occluded area in the target part is more accurate.

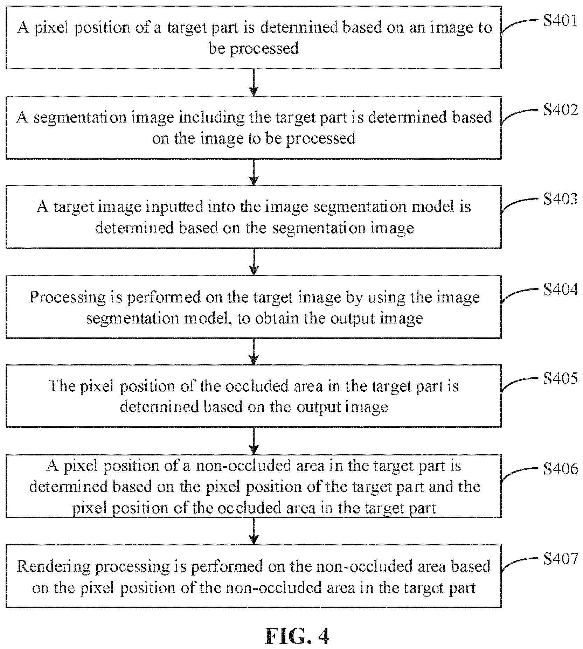

FIG. 4 is an implementation flowchart of a method for image processing according to an embodiment of the disclosure. As shown in FIG. 4, the method is applied to the device for image processing. The method includes the following operations S401 to S407.

At S401, a pixel position of a target part is determined based on an image to be processed.

At S402, a segmentation image including the target part is determined based on the image to be processed.

In some implementation, the device for image processing may obtain an affine-transformed image based on the image to be processed and an affine transformation matrix, and then perform segmentation on the affine-transformed image to obtain a segmentation image.

In some implementation modes, the affine transformation matrix may be an affine transformation matrix from the image to be processed to the affine-transformed image. The affine-transformed image includes the size of a local area of the target part (the local area including the target part may be a segmentation image), which may be consistent with the size of a model input image. In some other implementation, the affine transformation matrix may be an affine transformation matrix from an original picture to a picture with a model input size.

The device for image processing may determine the affine transformation matrix corresponding to the image to be processed based on the area occupied by the target part in the image to be processed and/or the size of an input image that can be inputted by the image segmentation model. The affine transformation matrix may be used to perform at least one of the transformations: translation, scaling, flip, rotation, shear, translation, rotation, scaling, oblique cutting, and the like, on the image to be processed.

The device for image processing may perform key point identification on the affine-transformed image to obtain key point information of a target part in the affine-transformed image, and then performs segmentation on the affine-transformed image based on the key point information of the target part in the affine-transformed image. In some other implementation, the device for image processing may perform segmentation on the affine-transformed image based on the key point information of the target part in the image to be processed, or based on the key point information of the target part in the image to be processed and the affine transformation matrix. In some other implementation, the device for image processing may perform segmentation on the affine-transformed image based on the position information, such as a center point, of the target part in the image to be processed or the affine-transformed image, to obtain a segmentation image. The segmentation image should include the whole target part.

In some other implementation, the device for image processing may perform segmentation on the image to be processed, to obtain the segmentation image. For example, the device for image processing may perform key point identification on the image to be processed to obtain key point information of a target part in the image to be processed, then performs segmentation on the image to be processed based on the key pint information of the target part in the image to be processed, to obtain the segmentation image.

Most of irrelevant backgrounds may be removed from the image to be processed or the affine-transformed image by performing segmentation on the image to be processed or the affine-transformed image, to remain an area of interest. The segmentation image may be a rectangle. In some other implementation, the segmentation image may be a non-rectangle, for example, a contour shape of the target part, a triangle, a non-rectangular quadrilateral or pentagon, and the like. No limits are made to specific shapes of the segmentation image in the embodiments of the disclosure.

At S403, a target image inputted into the image segmentation model is determined based on the segmentation image.

In some other implementation, the device for image processing may perform color transformation and/or normalized transformation on the segmentation image to obtain the target image.

In this way, the color transformation and/or normalized transformation is performed on the segmentation image to obtain the target image inputted into the image segmentation model. Features inputted into the image segmentation model can be simplified by performing the color transformation on the segmentation image, thereby reducing the calculation amount of obtaining the output image, and improving the speed of obtaining the output image. In a case where the normalized transformation is performed on the segmentation image, the feature of the segmentation image can be remained, but the size of the parameter is reduced, to improving the speed of obtaining the output image and improving the accuracy of the obtained output image.

In some other implementation, the device for image processing may take the segmentation image as the target image.

At S404, the target image is processed by using the image segmentation model, to obtain the output image.

In some implementation, the output image may include a target matrix having the same numbers of rows and columns as the pixels of the target image. An element value of each element in the target matrix characterizes the probability that the pixel corresponding to each element belongs to the target part or a non-target part. In this implementation, a value range of each element is any value from 0 to 1. If the element value of each element in the target matrix characterizes the probability that the pixel corresponding to the element belongs to the target part, it is determined that the pixel of the target image corresponding to the element value greater than a first threshold value belongs to a visible target part, and it is determined that the pixel of the target image corresponding to the element value less than or equal to the first threshold value belongs to other areas other than the visible target part. If the element value of each element in the target matrix characterizes the probability that the pixel corresponding to the element belongs to the non-target part, it is determined that the pixel of the target image corresponding to the element value less than a second threshold value belongs to a visible target part, and it is determined that the pixel of the target image corresponding to the element value greater than or equal to the second threshold value belongs to other areas other than the visible target part.

In some other implementation, the value range of each element may be other value, for example, the value range of each element is any value from 0 to 255 and the like.

In some other implementation, the element value of each element in the target matrix may be a first value or a second value. For example, the first value is 1, the second value is 0, the pixel corresponding to the first value characterizes that the pixel belongs to the visible target part area, and the pixel corresponding to the second value characterizes that the pixel belongs to other areas other than the visible target part area. Other areas other than the visible target part area may include other areas other than the invisible target part area and the target part.

In some other implementation, the output image may include: an occlusion mask having a first color and/or a first texture and an occlusion mask having a second color and/or a second texture. An area of the occlusion mask having the first color and/or the first texture corresponding to the target image may be the visible target part area, and an area of the occlusion mask having the second color and/or the second texture corresponding to the target image may be other areas other than the visible target part area.

Pixels in the target image or the segmentation image may have one-to-one correspondence with elements in a target matrix.

At S405, the pixel position of the occluded area in the target part is determined based on the output image.

Since the target image inputted into the image segmentation model is obtained based on the image to be processed and the affine transformation matrix, the visible target part area and other areas other than the visible target part area in the target image may be determined based on the output image outputted from the image segmentation model, and the pixel position of the occluded area in the target part of the image to be processed may be determined based on the output image, the affine transformation matrix and the pixel position of the target part.

At S406, a pixel position of a non-occluded area in the target part is determined based on the pixel position of the target part and the pixel position of the occluded area in the target part.

At S407, rendering processing is performed on the non-occluded area based on the pixel position of the non-occluded area in the target part.

In the embodiments of the disclosure, since the segmentation image obtained by performing segmentation on the image to be processed includes a target object, the proportion of the target part in the segmentation image is less than the proportion of the target part in the image to be processed, and the proportion of the target part in the target image that is inputted into the image segmentation model and is determined based on the segmentation image is less than the proportion of the target part in the image to be processed. In this way, the image segmentation model does not need to process an image feature other than a feature of the segmentation image, thereby avoiding the interference of the image feature other than the feature of the segmentation image, and improving the accuracy of an output image outputted by the image segmentation model, but also reducing the calculation amount of the output image obtained by using the image segmentation model, and improving the efficiency of detecting the pixel position of the occluded area in the target part.

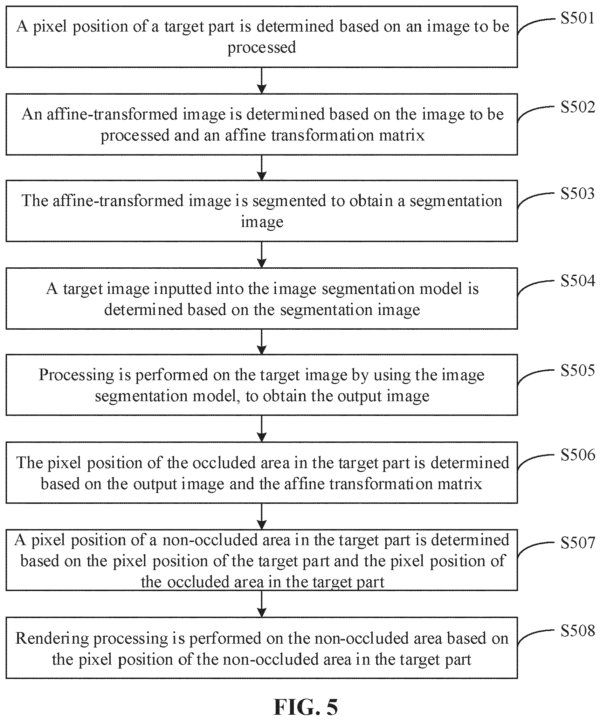

FIG. 5 is an implementation flowchart of a method for image processing according to an embodiment of the disclosure. As shown in FIG. 5, the method is applied to the device for image processing. The method includes the following operations S501 to S508.

At S501, a pixel position of a target part is determined based on an image to be processed.

At S502, an affine-transformed image is determined based on the image to be processed and an affine transformation matrix.

At S503, the affine-transformed image is segmented to obtain a segmentation image.

The affine transformation is a linear transformation from two-dimensional coordinates to two-dimensional coordinates. Affine transformation can maintain the straightness and parallelism of two-dimensional graphics. The straightness refers to that a transformed straight line is still straight without bending, and an arc is still arcuate. The parallelism refers to that a relative position relationship between two-dimensional graphics remains unchanged, parallel lines are still parallel, and an intersection angle of intersecting lines remains unchanged. The affine transformation may be implemented by a composition of a series of atomic transformations, including at least one of translation, scaling, flip, rotation and shear. Therefore, a process of at least one of the above five transformations from the original image to a transformed image may be determined using affine transformation matrix, that is, the affine transformation of the image is implemented by the affine transformation matrix.

The size of the segmentation image may be the same as the input size corresponding to the image segmentation model.

In this way, since the target image inputted into the image segmentation model is obtained through the affine transformation matrix and the image to be processed, the straightness and the parallelism of the image to be processed can be maintained in the obtained target image, and the target image can conform to the input of the image segmentation model. The target image is processed through the image segmentation model, to accurately obtain the output image which characterizes the occluded area in the target part, and then the pixel position of the occluded area in the image to be processed is obtained accurately through the output image and the affine transformation matrix.

In some other implementation, the affine transformation is performed on the image to be processed to obtain the affine-transformed image, and then the affine-transformed image is segmented to obtain a segmentation image. Therefore, the segmentation image can remain the feature in the image to be processed in a case where the affine transformation includes rotation, thereby improving the accuracy of the obtained output image. In a case where the image to be processed is segmented first and then the affine transformation is performed, if the affine transformation includes rotation, a filling pixel is added into the image, to make the size of the image be the same as the input size of the image segmentation model. Noise is added to the image inputted the model, which results in inaccuracy of the output image outputted from the model.

At S504, a target image inputted into the image segmentation model is determined based on the segmentation image.

At S505, processing is performed on the target image by using the image segmentation model, so as to obtain the output image.

At S506, the pixel position of the occluded area in the target part is determined based on the output image and the affine transformation matrix.

The output image may include a target matrix having the same numbers of rows and columns as the pixels of the target image. An element value of each element in the target matrix represents the probability that the pixel corresponding to the element belongs to the target part or a non-target part.

In this implementation, the output image is a target matrix. The target matrix may be a matrix of M rows and N columns. The pixels of the target image may include pixels of M rows and N columns. M and N are integers greater than or equal to 1, and M and N may be identical or different.

In a case where the element value of each element in the target matrix characterizes the probability that the pixel corresponding to the element belongs to the target part, the probability that the pixel in the target image corresponding to eacj element belongs to the target part increases with the increase of the element value of the element, and vice versa. In a case where the element value of each element in the target matrix characterizes the probability that the pixel corresponding to the element belongs to the non-target part, the probability that the pixel in the target image corresponding to each element belongs to the target part decreases with the decrease of the element value of the element, and vice versa.

At S507, a pixel position of a non-occluded area in the target part is determined based on the pixel position of the target part and the pixel position of the occluded area in the target part.

At S508, rendering processing is performed on the non-occluded area based on the pixel position of the non-occluded area in the target part.

In the embodiments of the disclosure, the affine-transformed image is first obtained through the affine transformation matrix and the image to be processed, and then the segmentation image is determined based on the affine-transformed image, so that the segmentation image can maintain the straightness and the parallelism of the image to be processed, and the size of the segmentation image can conform to the input of the image segmentation model. Next, the target image determined based on the segmentation image is processed through the image segmentation model, the output image which characterizes the occluded area in the target part can be obtained accurately, and then the pixel position of the occluded area in the target part of the image to be processed is obtained accurately through the output image and the affine transformation matrix.

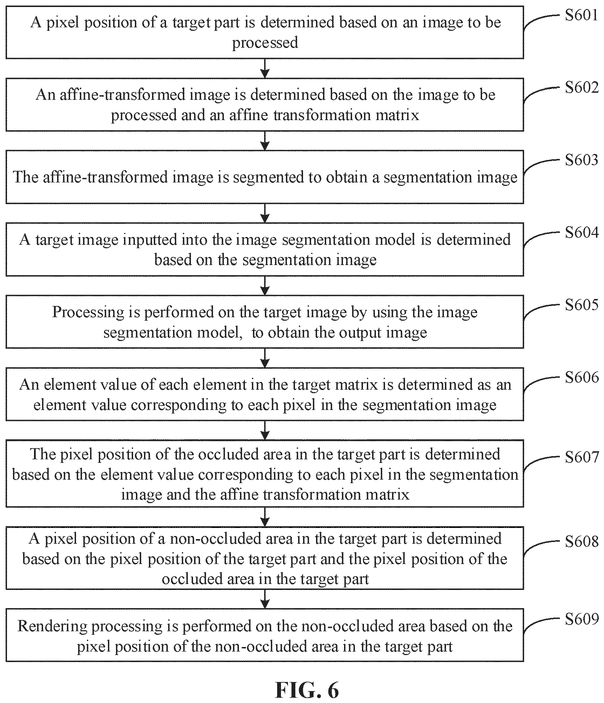

FIG. 6 is an implementation flowchart of a method for image processing according to another embodiment of the disclosure. As shown in FIG. 6, the method is applied to the device for image processing. The method includes the following operations S601 to S607.

At S601, a pixel position of a target part is determined based on an image to be processed.

At S602, an affine-transformed image is determined based on the image to be processed and an affine transformation matrix.

At S603, the affine-transformed image is segmented to obtain a segmentation image.

At S604, a target image inputted into the image segmentation model is determined based on the segmentation image.

At S605, the target image is processed by using the image segmentation model, so as to obtain the output image.

The output image may include a target matrix having the same numbers of rows and columns as the pixels of the target image. An element value of each element in the target matrix characterizes the probability that the pixel corresponding to each element belongs to the target part or a non-target part.

At S606, an element value of each element in the target matrix is determined as an element value corresponding to each pixel in the segmentation image.

At S607, the pixel position of the occluded area in the target part is determined based on the element value corresponding to each pixel in the segmentation image and the affine transformation matrix.

In an implementation, S607 may be implemented by the following modes. The element value corresponding to each pixel in a local image, including the target part, corresponding to the segmentation image in the image to be processed is determined based on the element value corresponding to each pixel in the segmentation image and the affine transformation matrix. The pixel position of the occluded area in the target part is determined based on the element value corresponding to each pixel in the local image.

In this way, the element value corresponding to each pixel in a local image corresponding to the segmentation image in the image to be processed can be inversely calculated based on the element value corresponding to each pixel in the segmentation image and the affine transformation matrix, and then the pixel position of the occluded area in the target part may be determined based on the element value corresponding to each pixel in the local image, to provide a mode of quickly determining the pixel position of the occluded area in the target part.

In some embodiments, the device for image processing determines a target element value meeting a first threshold value condition from the element value corresponding to each pixel in the local image at the pixel position of the target part, determines a pixel position of a second specified pixel in the image to be processed, the second specified pixel corresponding to a first specified pixel in the local image, and determines the pixel position of the occluded area in the target part based on the pixel position of the target element value corresponding to the local image and the pixel position of the second specified pixel.

In some implementation, the operation that a target element value meeting a first threshold value condition is determined from the element value corresponding to each pixel in the local image may include an operation. A target element value greater than a first threshold value or less than a second threshold value is determined from the element value corresponding to each pixel in the local image.

In a case where the element value of each element in the target matrix characterizes the probability that the pixel corresponding to the element belongs to the target part, the target element value less than the second threshold value is determined. In a case where the element value of each element in the target matrix represents the probability that the pixel corresponding to the element belongs to the non-target part, the target element value greater than the first threshold value is determined. The device for image processing can obtain each pixel position in the occluded area of the target part of the segmentation image, and then obtain each pixel position in the occluded area of the target part in the local image based on each pixel position in the occluded area of the target part of the segmentation image and the affine transformation matrix.

The probability that the pixel corresponding to the target element belongs to a visible target part is greater than the probability that the pixel corresponding to the target element belongs to other areas other than the visible target part.

The first specified pixel may be any one or at least two pixels in the local image. In an implementation, the first specified pixel may be a pixel in an upper left corner of the local image. In other implementation, the first specified pixel may be a pixel in an upper right corner, a pixel in a lower left corner, a pixel in a lower right corner, a pixel in a middle position, pixels in other positions, and the like in the local image. Specific implementation modes of the first specified pixel position are not limited in the embodiments of the disclosure.

In this way, the pixel position of the occluded area in the target part of the image to be processed is determined based on the pixel position of the occluded area of the target part in the local image and the determined pixel position of the second specified pixel in the image to be processed, and the second specified pixel corresponds to the first specified pixel in the local image. Therefore, a determination result of whether each pixel only in the local image belongs to the target part needs to be transferred and processed, thereby reducing the time consumption of transferring and processing the determination result.

In some other embodiments, the device for image processing may determine an element value corresponding to each pixel in a specified area other than the local image in the image to be processed, determine a specified element value meeting the first threshold value condition from the element value corresponding to each pixel in the specified area and the element value in each element value in the local image at the pixel position of the target part, and determine the pixel position of the occluded area in the target part based on the pixel position of the specified element value corresponding to the image to be processed.

In some implementation, the operation that a specified element value meeting a first threshold value condition is determined from the element value corresponding to each pixel in a specified area and the element value of each pixel in the local image may include operations as follows. A specified element value greater than a first threshold value or less than a second threshold value is determined from the element value corresponding to each pixel in the specified area and the element value of each pixel in the local image.

In an implementation, in a case where the element value of each element in the target matrix characterizes the probability that the pixel corresponding to the element belongs to the target part, the determined element value corresponding to each pixel in the specified area is 0. In a case where the element value of each element in the target matrix characterizes the probability that the pixel corresponding to the element belongs to the non-target part, the determined element value corresponding to each pixel in the specified area is 1. In some other implementation, if the element value of each element in the target matrix is between 0 and 255, the element value corresponding to each pixel in the specified area is 0 to 255.

In this way, by determining the element value corresponding to each pixel in the specified area other than the local image in the image to be processed, the element value corresponding to each pixel of the image to be processed can be obtained, and the pixel position of the occluded area in the target part in the image to be processed may be determined based on the element value corresponding to each pixel of the image to be processed. Thus, a mode of accurately determining the pixel position of the occluded area in the target part is simple and easy to implement.

At S608, a pixel position of a non-occluded area in the target part is determined based on the pixel position of the target part and the pixel position of the occluded area in the target part.

At S609, rendering processing is performed on the non-occluded area based on the pixel position of the non-occluded area in the target part.

In the embodiments of the disclosure, whether each pixel of a local image, corresponding to the segmentation image, in the image to be processed is a pixel of the occluded area can be obtained based on the element value corresponding to each pixel in the segmentation image and the affine transformation matrix, and then each pixel position of the non-occluded area is accurately determined based on each pixel position of the target part and each pixel position of the occluded area, and the rendering processing is performed on the non-occluded area accurately. Therefore, the rendering of the target part is natural.

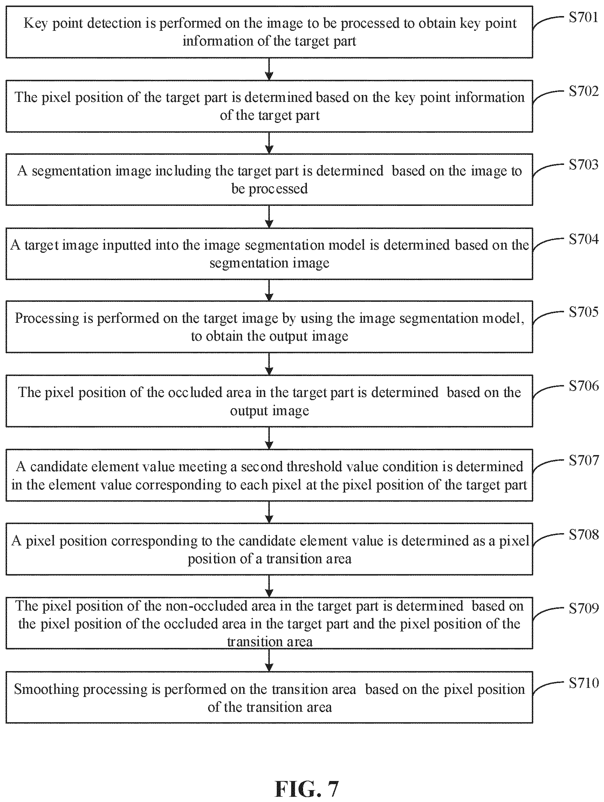

FIG. 7 is an implementation flowchart of a method for image processing according to another embodiment of the disclosure. As shown in FIG. 7, the method is applied to the device for image processing. The method includes the following operations S701 to S710.

At S701, key point detection is performed on an image to be processed to obtain key point information of a target part.

At S702, a pixel position of the target part is determined based on the key point information of the target part.

At S703, a segmentation image including the target part is determined based on the image to be processed.

At S704, a target image inputted into an image segmentation model is determined based on the segmentation image.

At S705, processing is performed on the target image by using the image segmentation model, to obtain an output image.

At S706, a pixel position of an occluded area in the target part is determined based on the output image.

In some implementation, the device for image processing may determine an element value corresponding to each pixel at the pixel position of the target part based on the output image, and then determine the pixel position of the occluded area in the target part based on the element value corresponding to each pixel at the pixel position of the target part.

The device for image processing may determine an element value corresponding to each element in a target matrix as an element value corresponding to each pixel in the segmentation image, and then determine an element value corresponding to each pixel in a local image, including the target part, corresponding to the segmentation image in the image to be processed based on the element value corresponding to each pixel in the segmentation image and the affine transformation matrix. Since the local image is a part including the target part in the image to be processed, the device for image processing may determine the element value corresponding to each pixel at the pixel position of the target part based on the element value corresponding to each pixel in the local image.

In another implementation, if the device for image processing performs segmentation on the image to be processed to obtain the segmentation image, the device for image processing may determine the element value corresponding to each pixel in the local image based on the element value corresponding to each pixel in the segmentation image, and then obtain the element value corresponding to each pixel at the pixel position of the target part.

At S707, a candidate element value meeting a second threshold value condition is determined from the element value corresponding to each pixel at the pixel position of the target part.

In some implementation, S707 may be implemented in the following modes. A candidate element value less than or equal to the first threshold value and greater than a third threshold value, or greater than or equal to a second threshold value and less than or equal to a fourth threshold value is determined in the element value corresponding to each pixel at the pixel position of the target part.

Before S707, the device for image processing may execute an operation that the element value corresponding to each pixel at the pixel position of the target part is determined based on the output image.

In an implementation, in a case where the element value of each element in the target matrix represents the probability that a pixel corresponding to the element belongs to the target part, a candidate element value greater than or equal to the second threshold value and less than or equal to the fourth threshold value is determined. In a case where the element value of each element in the target matrix characterizes the probability that the pixel corresponding to the element belongs to the non-target part, a candidate element value less than or equal to the first threshold value and greater than the third threshold value is determined.

In some implementation, an absolute value of a difference value between the first threshold value and 0.5 may be the same as the absolute value of the difference value between the third threshold value and 0.5, or the absolute value of the difference value between the second threshold value and 0.5 may be the same as the absolute value of the difference value between the fourth threshold value and 0.5.

At S708, a pixel position corresponding to the candidate element value is determined as a pixel position of a transition area.

A difference value between the probability that each pixel in the transition area belongs to the target part and the probability that each pixel in the transition area belongs to the non-target part may be less than a target value.

At S709, a pixel position of a non-occluded area in the target part is determined based on the pixel position of the occluded area in the target part and the pixel position of the transition area.

In this implementation, the target part may include three areas. The three areas are an occluded area in the target part, the transition area, and the non-occluded area in the target part. The device for image processing may determine a pixel position other than the pixel position of the occluded area and the pixel position of the transition area in the target part at the pixel position of the target part as the pixel position of the non-occluded area in the target part.

At S710, smoothing processing is performed on the transition area based on the pixel position of the transition area.

The operation that the smoothing processing is performed on the transition area may include an operation that transparency smoothing processing is performed on the transition area. The transparency smoothing processing may also be called anti-aliasing processing.

In some implementation, the device for image processing may not execute operation S710.

In the embodiments of the disclosure, the pixel position of the transition area may be determined, and the element value corresponding to each pixel in the transition area characterizes that the pixel may belong to the target part or the non-target part, In this way, the pixel position of the non-occluded area in the target part determined based on the pixel position of the occluded area in the target part and the pixel position of the transition area can effectively avoids from determining certain pixels in the transition area as the pixels in the non-occluded area, thereby accurately determining the pixel position of the non-occluded area in the target part.

In addition, the element value corresponding to each pixel in the transition area characterizes that the pixel may belong to the target part or the non-target part, so that the transition between the occluded area and the non-occluded area may be natural by performing smoothing processing on the transition area, and the accuracy and the naturalness of processing the image to be processed can be improved.

In some embodiments, the image segmentation model may be obtained by training a training sample set and a target sample set. The training sample set may include a plurality of training sample images. At least one part of each training sample image may be occluded. The target sample set may include a plurality of target sample images. Each of the target sample images may include a mask of a non-occluded area in the part.

A method for determining an image segmentation model in any embodiment of the disclosure is described below.

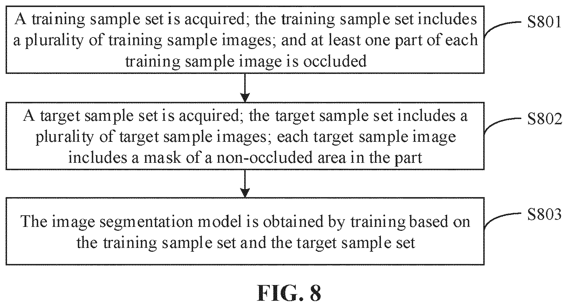

FIG. 8 is a flowchart of a method for determining an image segmentation model according to an embodiment of the disclosure. As shown in FIG. 8, the method is applied to the device for image processing. The method includes the following operations S801 to S803.

At S801, a training sample set is acquired. The training sample set includes a plurality of training sample images. At least one part of each training sample image is occluded.

In some implementation, at least one part may include only a target part. In this way, the target part in each training sample image is occluded by an occlusion. In some other implementation, the at least one part may include not only the target part, but also other parts other than the target part. For example, the at least one part may include a plurality of parts that can be rendered in a face image. In this way, the occlusion in each training sample image may occlude the target part and/or occlude other parts other than the target part.

At S802, a target sample set is acquired. The target sample set includes a plurality of target sample images. Each target sample image includes a mask of a non-occluded area in the part.

In an implementation process, each target sample image may also include a mask of other area other than a non-occluded area.

In a case where the at least one part only includes the target part, the mask of the non-occluded area in the part may be a mask of a non-occluded area of the target part. In a case where the at least one part not only includes the target part, but also includes other parts, the mask of the non-occluded area in the part is not occluded not only includes a mask of a non-occluded area of the target part, but also includes a mask of a non-occluded area of other parts.

At S803, the image segmentation model is obtained by training based on the training sample set and the target sample set.

The device for image processing may acquire an initial segmentation model, and then perform supervised learning on the initial segmentation model by using the training sample set and the target sample set, to obtain an image segmentation model. Supervised learning may be Groud Truth supervised learning.

In a case where the at least one part only includes the target part, the obtained image segmentation model may determine that each pixel in the input image belongs to a visible target part or other areas other than the visible target part.

In a case where the at least one part includes a plurality of parts, the obtained image segmentation model may determine each pixel in the input image belongs to each visible part or other areas other than each visible part. For example, if the image to be processed includes a plurality of parts, the device for image processing may perform segmentation on the image to be processed to obtain a plurality of segmentation images, obtain a plurality of target images based on the plurality of segmentation images, input the plurality of target images into the image segmentation mode, so as to obtain that each pixel in the plurality of target images belongs to each visible part or other areas other than each visible part, and obtain that each pixel in the input image belongs to each visible part or other areas other than each visible part.

In the embodiments of the disclosure, the image segmentation model is obtained by training by taking a plurality of training sample images as a training input and taking the plurality of target sample images as a training target, so that a subsequently inputted target image can be processed through the image segmentation model, and then the pixel position of the non-occluded area in the target part is obtained. Therefore, the pixel position of the non-occluded area in the target part may be automatically obtained by the device for image processing, the labor is saved, and the determined pixel position of the non-occluded area in the target part is accurate.

In some embodiments, the training sample set is obtained by randomly occluding an occlusion of each occlusion image in an occlusion image set on at least one non-occluded part of each segmentation image in a segmentation image set, and the target sample set is determined based on a position of the occlusion in each occlusion image relative to the at least one non-occluded part.

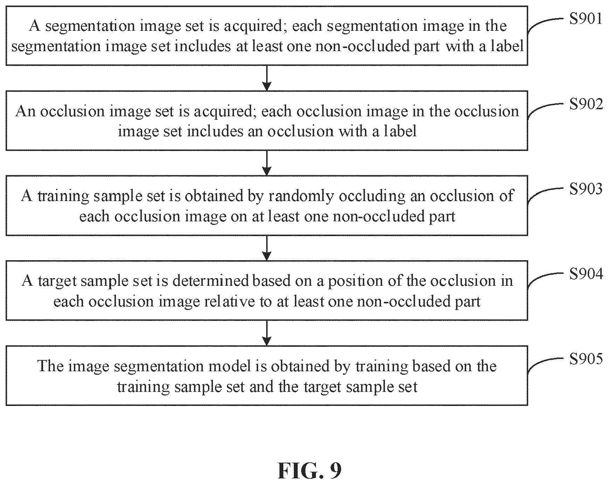

FIG. 9 is a flowchart of a method for determining another image segmentation model according to an embodiment of the disclosure. As shown in FIG. 9, the method is applied to the device for image processing. The method includes the following operations S901 to S905.

At S901, a segmentation image set is acquired. Each segmentation image in the segmentation image set includes at least one non-occluded part with a label.

At least one part in each segmentation image is a non-occluded part. The device for image processing may determine key point information of at least one part in each segmentation image, and label at least one part based on the key point information of the at least one part. In some implementation, the device for image processing may determine a mask of an area of at least one part based on the at least one labeled part.

The device for image processing may acquire a plurality of face images, and performs key point identification on each face image. In this way, at least one part is segmented based on a face key point, the at least one part is labeled based on the key point information of the at least one part, thereby obtaining the segmentation image set. In some implementation, the device for image processing may perform affine transformation on each face image to obtain affine-transformed image. Affine transformation may be performed on different face images by using the same or different affine transformation matrices. Then, the device for image processing may segment each affine-transformed image to obtain the segmentation image.

In some implementation, the device for image processing may also perform at least one type of processing of color transformation, normalization transformation and affine transformation on the segmented image, and label at least one part in the processed image, so as to obtain the segmentation image set.

At S902, an occlusion image set is acquired. Each occlusion image in the occlusion image set includes an occlusion with a label.

The device for image processing may acquire a plurality of occlusion images including occlusions, and then label the occlusions in the occlusion images. Further, the device for image processing may also determine a mask of an area of an occlusion based on the labeled occlusion.

In some implementation, the device for image processing may also perform at least one of color transformation, normalization transformation, and affine transformation on the occlusion image, and label the occlusion in the processed image, so as to obtain the occlusion image set.

At S903, a training sample set is obtained by randomly occluding an occlusion of each occlusion image on at least one non-occluded part.

One occlusion can occlude randomly on at least one part, a plurality of training sample images can be obtained based on one segmentation image and one occlusion.

At S904, a target sample set is determined based on the position of the occlusion in each occlusion image relative to at least one non-occluded part.

With S904, each training sample image in the target sample set may be a segmentation result of a non-occluded area in the part of the training sample image of the training sample set. The segmentation result of the non-occluded area may include a mask of a non-occluded area and a mask of an area other than the non-occluded area.

At S905, the image segmentation model is obtained by training based on the training sample set and the target sample set.

In the embodiments of the disclosure, the occlusion in each occlusion image is randomly occluded on the at least one non-occluded part to obtain the training sample set. Therefore, one occlusion can occlude different positions of the part to obtain different training sample images. A plurality of training samples can be obtained by combining one occlusion and one part, and then a large number of training samples can be determined based on a small number of segmentation images and a small number of occlusion images. In this way, the performance of the image segmentation model obtained by training is high, and the accuracy of the determined position pixel of the non-occluded area in the target part is high.

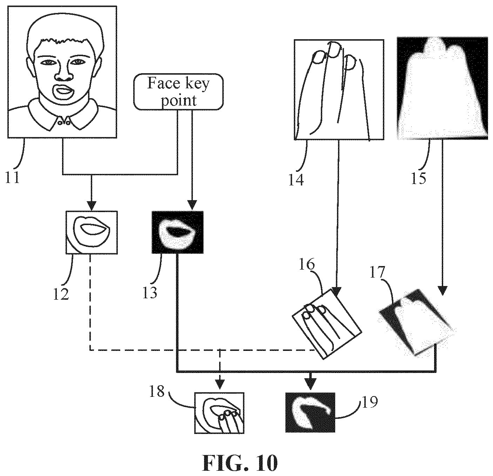

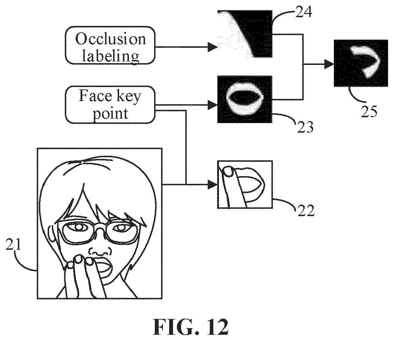

FIG. 10 is a flowchart of determining a training sample image and a target sample image according to an embodiment of the disclosure. As shown in FIG. 10, the device for image processing may acquire a non-occluded face image 11, then performs detection on face key points on the face image 11 to obtain the face key points, and obtains key point information of a target part based on the face key points. The device for image processing may perform affine transformation on the face image 11 to obtain an affine-transformed image, then segments the affine-transformed image to obtain a segmentation image, and performs graying processing and/or normalization transformation on the segmentation image to obtain an image 12. An image 13, including a mask of an area of a target part, corresponding to the image 12 is determined based on the image 12 and the key point information of the target part in FIG. 12. In some implementation, the face image 11 may be an image labeled with two-dimensional key points. That is, the face image 11 has key point coordinates corresponding to various parts. The various parts include a face contour, five sense organs and the like.

The device for image processing may acquire an occlusion image 14, and then determine an image 15, including an area mark of an occlusion, corresponding to the occlusion image based on a labeling result obtained by labeling the occlusion in the occlusion image 14. In an implementation, affine transformation processing may be performed on the image 14 and the image 15 respectively, and gray processing is performed on the affine-transformed image 14, so as to obtain an image 16 and an image 17 respectively.

Then, the device for image processing may randomly combine the image 12 and the image 16, to enable the occlusion in the image 16 to randomly occlude on the target part of the image 12 to obtain an image 18. Then, an image 19, including a mask of an area of a visible target part and a mask of an area other than the visible target part, corresponding to image 18 is obtained based on a position of the occlusion in the image 16 relative to the target part in the image 12, the mask of the area of the target part in the image 13, and the mask of the area of the occlusion in the image 17.

The image 18 may be a training sample image, and the image 19 may be a target sample image corresponding to the training sample image.

In some embodiments, the target sample set is determined based on the non-occluded area in the at least one part of each of the training sample images. The non-occluded area in the at least one part of each of the training sample images is determined based on an occlusion area of the training sample image and the key point information of the at least one part in the training sample image.

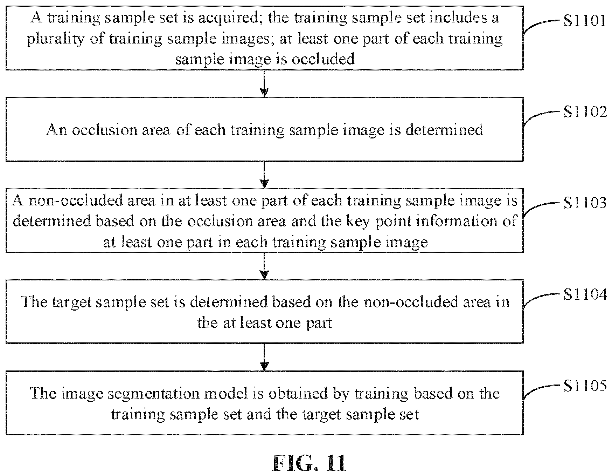

FIG. 11 is an implementation flowchart of another method for determining an image segmentation model according to an embodiment of the disclosure. As shown in FIG. 11, the method is applied to the device for image processing. A difference between the embodiment corresponding to FIG. 11 and the embodiment corresponding to FIG. 9 or FIG. 10 includes that the device for image processing in the embodiment corresponding to FIG. 9 or FIG. 10 acquires a non-occluded face image and an occlusion image respectively, and the device for image processing in the embodiment corresponding to FIG. 11 acquires an occluded image in which an occlusion occludes a face part. The method includes the following operations S1101 to S 1105.

At S1101, a training sample set is acquired. The training sample set includes a plurality of training sample images. At least one part of each training sample image is occluded.

The training sample image may be an occluded image in which the face part is occluded. The plurality of training sample images may be directly acquired. For example, the plurality of training sample images may be obtained by one shooting, downloading, and intercepting from a video.

At S 1102, an occlusion area of each training sample image is determined.

An occlusion area of each training sample image may be determined by manually labeling.

At S1103, a non-occluded area in at least one part of each training sample image is determined based on the occlusion area and the key point information of at least one part in the training sample image.

An area of at least one part may be determined through the key point information of the at least one part, and then the non-occluded area in the at least one part can be determined based on the occlusion area and the area of the at least one part.

At S1104, a target sample set is determined based on the non-occluded area in the at least one part.

The device for image processing may determine a target sample image corresponding to each training sample image based on a non-occluded area in the at least one part, and the target sample image includes a mask of an area of the non-occluded area in the part and a mask of an area other than the non-occluded area in the part, so as to obtain the target sample set.

At S1105, the image segmentation model is obtained by training based on the training sample set and the target sample set.

In the embodiments of the disclosure, the area of at least one part of each training sample image may be determined based on the key point information of the at least one part in the training sample image, the non-occluded area in the at least one part may be obtained based on the area of the at least one part and the determined occlusion area of each training sample image, and the target sample set is determined based on the non-occluded area in the at least one part. Therefore, the target sample set is determined based on the obtained training sample in which at least one part is occluded. Since the training sample is a directly obtained sample in which at least one part is occluded, so that the training sample set and the target sample set are easily obtained, and the obtained training sample set and the target sample set conform to a real scenario.

FIG. 12 is another flowchart of determining a training sample image and a target sample image according to an embodiment of the disclosure. As shown in FIG. 12, the device for image processing may acquire a face image 21 in which a target part is occluded, then performs detection on key points on the face image to obtain face key points, and obtains key point information of the target part based on the face key points. The device for image processing may perform affine transformation on the face image 21 to obtain an affine-transformed image, perform segmentation on the affine-transformed image to obtain a segmentation image, and perform graying processing and/or normalization transformation on the segmentation image to obtain an image 22. An image 23, including a mask of an area of a target part and a mask of an area of a non-target part, corresponding to the image 22 is determined based on the image 22 and the key point information of the target part in the face key points.

The device for image processing may perform occlusion labeling on the occlusion through the face image 21, determine the affine-transformed image based on the labeled face image and the affine transformation matrix, and segment the affine-transformed image, so as to determine an image 24 including the mask of the area of the occlusion and a mask of an area other than the occlusion based on the label on the occlusion in the segmentation image. The affine transformation matrix and the segmentation position for performing affine transformation on the face image 21 are respectively the same as those of the affine transformation matrix and the segmentation position for performing affine transformation on the labeled face image 21. In some other implementation, the device for image processing may perform affine transformation and segmentation only on the labeled face image 21 to obtain an image 22, determine an image 23 based on the image 22 and the key point information of the target part in the face key point, and determine an image 24 based on occlusion label in the image 22. In some other implementation, the device for image processing may perform occlusion labeling on the occlusion based on the image 22, and determine the image 24, including the mask of the area of the occlusion, corresponding to the image 22 based on a result of the occlusion labeling.

Then, the device for image processing may combine the image 23 and the image 24 to obtain an image 25, including the mask of an area of the visible target part and the mask of an area other than the visible part, corresponding to the image 22.

The image 22 may be a training sample image, and the image 25 may be a target sample image corresponding to the training sample image.

In some implementation, the image segmentation model may be obtained by training not only based on the training sample image and the target sample image determined by the embodiment corresponding to FIG. 9 or FIG. 10, but also based on the training sample image and the target sample image determined by the embodiment corresponding to FIG. 11 or FIG. 12. In some other implementation, the image segmentation model may be obtained by training based on the training sample image and the target sample image determined by the embodiment corresponding to FIG. 9 or FIG. 10. In some other implementation, the image segmentation model may be obtained by training based on the training sample image and the target sample image determined by the embodiment corresponding to FIG. 11 or FIG. 12.

In some embodiments, the target image inputted into the image segmentation model is a gray scale image. In some other embodiments, the target image inputted into the image segmentation model may be a multi-channel Red-Green-Blue (RGB) image.

The device for image processing may perform processing on the image to be processed after obtaining the image to be processed, so as to obtain the target image that can be inputted into the image segmentation model. Exemplarily, the device for image processing may perform key point detection on an image to be processed to obtain the size and/or the position of a target part in the image to be processed, determine an affine-transformed image corresponding to the image to be processed based on an affine transformation matrix and the size and/or position of the target part, and segment the affine-transformed image, so as to obtain a segmentation image with the size of the input size of an image segmentation model. The device for image processing may also perform color transformation and/or normalization transformation on the segmentation image. The device for image processing may perform the affine transformation first and then perform color transformation and/or normalization transformation to obtain the target image inputted into the image segmentation model. In another implementation, the device for image processing may perform the color transformation and/or the normalization transformation first and then perform the affine transformation on the segmentation image to obtain the target image.

An output image corresponding to the target image may be obtained through the image segmentation model. The output image is a target matrix having the same numbers of rows and columns as the pixels of the target image. An element value of each element in the target matrix represents the probability that a pixel of the target image corresponding the element belongs to a target part or a non-target part. Therefore, the pixel position of the non-occluded area in the target part in the target image can be determined based on the output image, and then the pixel position in the non-occluded area in the target part in the image to be processed may be obtained on the basis the pixel position of the non-occluded area in the target part and the pixel position of the target part in the target image. Therefore, an occlusion determination mask in the image to be processed may be obtained based on an occlusion determination mask in the target image. In an implementation process, the occlusion determination mask may include a mask of a non-occluded area in the target part and a mask of an area other than the non-occluded area in the target part. Exemplarily, the device for image processing may inversely calculate a mask position in the image to be processed based on the output image and the affine transformation matrix for performing affine transformation on the image to be processed. There may be the following two modes for inversely calculating the mask position in the image to be processed.

In a first manner, the element value of each pixel in the target matrix outputted from the model is determined as an element value corresponding to each pixel in the segmentation image, then the element value of each pixel in a local image, including the target part, corresponding to the segmentation image in the image to be processed is determined based on the element value corresponding to each pixel of the segmentation image and the affine transformation matrix, and the element value corresponding to each pixel in a specified area other than the local image is filled to obtain a matrix corresponding to the pixel of the image to be processed, and the occlusion determination mask in the image to be processed is determined based on the matrix corresponding to the pixel of the image to be processed. In some implementation, the matrix corresponding to the pixel of the segmentation image is an element value of each element in the target matrix outputted from the model. A distribution range is 0 to 255 (a lip part is close 0, and a non-lip is close to 255) or 0 to 1 (a lip part is close to 0, and a non-lip is close to 1). The element value corresponding to each pixel in the specified area other than the local image is filled as 255 or 1.

In a second manner, the element value of each element in the target matrix outputted from the model is determined as an element value corresponding to each pixel in the segmentation image, and the element value of each pixel in a local image, including the target part, corresponding to the segmentation image in the image to be processed is determined based on the element value corresponding to each pixel of the segmentation image and the affine transformation matrix. The position of an upper left point of the local image corresponding to the image to be processed is determined, and the occlusion determination mask in the image to be processed is determined based on the element value of each pixel in the local image and a position of the upper left point of the local image corresponding to the image to be processed.

In a case where the second manner is adopted, the space and the time consumption can be saved when the occlusion determination result is transferred and processed.

In order to make the beautifying special effects on the target part more diverse and natural, the special effects may locate an edge and a position of the target part in combination with point position information provided by a key point of the target part. On this basis, the determination of the occlusion in the target part is added, to not add a special effect when a pixel is determined to be occluded, thereby achieving the most realistic rendering effect.

In some implementation, in order to make an occlusion determination result for an area of the target part smoother and more stable in use, a high-low dual-threshold value strategy is used for the result. When the occlusion determination result of the pixel is lower than a low threshold value, pixel rendering processing is performed on the pixel by using the solution of the disclosure. When the occlusion determination result of the pixel is higher than a high threshold value, the pixel rendering processing is not performed on the pixel or the pixel rendering processing is performed on the pixel by using other solutions. When the occlusion determination result of the pixel is between the two threshold values, transparency smoothing processing is performed on the pixel. The pixel rendering processing performed by using other solutions may be at least one of skin grinding processing, freckle removal processing, shadow processing, and the like.

In the embodiments of the disclosure, face occlusion information is provided by using a face analysis solution, and original occlusion information for all parts can become accurate pixel-level occlusion information. A mask of a local area is learned, thereby improving the accuracy and reducing the time consumption. Special effect rendering is performed in a mode of combining a face key point and an occlusion mask, thereby increasing the reality of the special beautifying effect. An edge of the occlusion mask is smoother and more natural and stable by using a dual-threshold value strategy.

In the embodiments of the disclosure, in a scenario, such as live broadcasting or selfie, where a beautifying effect is commonly used, users can not get accurate occlusion information, so that a lipstick effect is rendered on an occlusion when their lips are occluded by hands or other objects, resulting in a "goof' phenomenon. Which pixel is non-lip in a lip area in the image to be processed can be obtained by using the solution in the embodiments of the disclosure, so that the special effect only appears at a place where the rendering should be performed, rather than appearing on the occlusion. Then, when the hands or other objects occlude the lips or other face parts, special effect rendering is not performed on the occlusion, the special effect rendering is performed only on the non-occluded face parts, and the edge is natural and smooth.

Based on foregoing embodiments, the embodiments of the disclosure provide an apparatus for image processing. Various units included in the apparatus and various modules unit included in each unit may be implemented through a processor in a device for image processing, in practice, may also be implemented through a specific logic circuit.

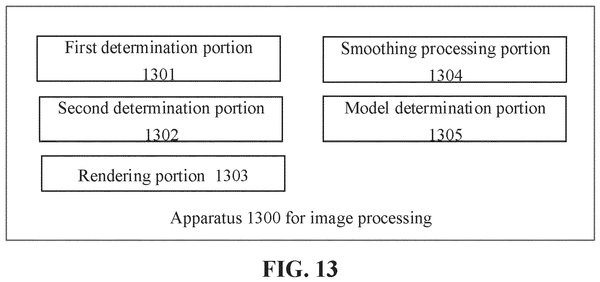

FIG. 13 is a schematic structural diagram of a composition of an apparatus for image processing according to the embodiments of the disclosure. As shown in FIG. 13, the apparatus1300 for image processing includes a first determination portion 1301, a second determination portion 1302 and a rendering portion 1303.

The first determination portion 1301 is configured to determine a pixel position of a target part and a pixel position of an occluded area in the target part based on an image to be processed.

The second determination portion 1302 is configured to determine a pixel position of a target part and a pixel position of an occluded area in the target part based on an image to be processed.

The rendering portion 1303 is configured to perform rendering processing on the non-occluded area based on the pixel position of the non-occluded area in target part.

In some embodiments, the first determination portion 1301 is further configured to perform key point detection on the image to be processed to obtain key point information of the target part, and determine the pixel position of the target part based on the key point information of the target part.

In some embodiments, the first determination portion 1301 is further configured to determine the pixel position of the occluded area in the target part based on an image segmentation model and the image to be processed.

In some embodiments, the first determination portion 1301 is further configured to determine a segmentation image including the target part based on the image to be processed, determine a target image inputted into the image segmentation model based on the segmentation image, process the target image by using the image segmentation model, so as to obtain an output image, and determine the pixel position of the occluded area in the target part based on the output image.

In some embodiments, the first determination portion 1301 is further configured to determine an affine-transformed image based on the image to be processed and an affine transformation matrix, segment the affine-transformed image to obtain a segmentation image, and determine the pixel position of the occluded area in the target part based on the output image and the affine transformation matrix.

In some embodiments, the output image includes a target matrix having the same numbers of rows and columns as the pixels of the target image or the segmentation image. An element value of each element in the target matrix characterizes a probability that a pixel corresponding to the element belongs to the target part or a non-target part. The first determination portion 1301 is further configured to determine the element value of each element in the target matrix as the element value corresponding to each pixel in the segmentation image, and determine the pixel position of the occluded area in the target part based on the element value corresponding to each pixel in the segmentation image and the affine transformation matrix.

In some embodiments, the first determination portion 1301 is further configured to determine an element value corresponding to each pixel in a local image, including the target part, corresponding to the segmentation image in the image to be processed based on the element value corresponding to each pixel in the segmentation image and the affine transformation matrix, and determine the pixel position of the occluded area in the target part based on the element value corresponding to each pixel in the local image.

In some embodiments, the first determination portion 1301 is further configured to determine a target element value meeting a first threshold value condition from the element value corresponding to each pixel in the local image at the pixel position of the target part, determine a pixel position of a second specified pixel in the image to be processed, the second specified pixel corresponding to a first specified pixel in the local image, and determine the pixel position of the occluded area in the target part based on the pixel position of the target element value corresponding to the local image and the pixel position of the second specified pixel.

In some embodiments, the first determination portion 1301 is further configured to: determine an element value corresponding to each pixel in a specified area other than the local image in the image to be processed; determine a specified element value meeting the first threshold value condition from the element value corresponding to each pixel in the specified area and the element value of each pixel in the local image at the pixel position of the target part; and determine the pixel position of the occluded area in the target part based on the pixel position of the specified element value corresponding to the image to be processed.

In some embodiments, the first determination portion 1301 is further configured to: determine an element value corresponding to each pixel at the pixel position of the target part based on the output image. The second determination part 1302 is further configured to: determine a candidate element value meeting a second threshold value condition in the element value corresponding to each pixel at the pixel position of the target part; determine a pixel position corresponding to the candidate element value as a pixel position of a transition area; and determine the pixel position of the non-occluded area in the target part based on the pixel position of the occluded area in the target part and the pixel position of the transition area.

In some embodiments, the apparatus 300 for image processing further includes a smoothing processing portion 1304. The smoothing processing portion 1304 is configured to perform smoothing processing on the transition area based on the pixel position of the transition area.

In some embodiments, the image segmentation model may be obtained by training a training sample set and a target sample set. The training sample set may include a plurality of training sample images. At least one part of each training sample image is occluded. The target sample set may include a plurality of target sample images. Each of the target sample images may include a mask of a non-occluded area in the part.

In some embodiments, the apparatus 1300 for image processing further includes a model determination portion 1305. The model determination portion 1305 is configured to: acquire a training sample set, herein the training sample set includes a plurality of training sample images, and at least one part of each training sample image is occluded; acquire the target sample set, herein the target sample set includes a plurality of target sample images, and each target sample image includes a mask of a non-occluded area in the part; and train to obtain an image segmentation model based on the training sample set and the target sample set.

In some embodiments, the training sample set is obtained by randomly occluding an occlusion of each occlusion image in an occlusion image set on at least one non-occluded part of each segmentation image in a segmentation image set.

The target sample set is determined based on a position of the occlusion in each occlusion image relative to the at least one non-occluded part.

In some embodiments, the model determination portion 1305 is further configured to: acquire a segmentation image set and an occlusion image set, herein each segmentation image in the segmentation image set includes at least one non-occluded part with a label, and each occlusion image in the occlusion image set includes an occlusion with a label. A training sample set is acquired by randomly occluding an occlusion in each occlusion image on at least one non-occluded part to obtain the training sample set. A target sample set is acquired by determining the target sample set based on a position of the occlusion in each occlusion image relative to the at least one non-occluded part.

In some embodiments, the target sample set is determined based on the non-occluded area in the at least one part of each of the training sample images. The non-occluded area in the at least one part of each of the training sample images is determined based on an occlusion area of each of the training sample images and the key point information of the at least one part in each of the training sample images.

In some embodiments, the model determination portion 1305 is further configured to: determine an occlusion area of each training sample image; determine a non-occluded area in at least one part of each training sample image based on the occlusion area and the key point information of at least one part in the training sample image; and determine the target sample set based on the non-occluded area in the at least one part.

The above descriptions about the apparatus embodiments are similar to descriptions about the method embodiments and beneficial effects similar to those of the method embodiments are achieved. Technical details undisclosed in the apparatus embodiments of the disclosure may be understood with reference to the descriptions about the method embodiments of the disclosure.

It is to be noted that, in the embodiments of the disclosure, when implemented in form of a software functional module and sold or used as an independent product, the abovementioned method for image processing may also be stored in a computer storage medium. Based on such an understanding, a substantial part of the technical solutions of the embodiments of the disclosure or parts thereof making contributions to the related art may be embodied in form of a software product. The computer software product is stored in a storage medium, including a plurality of instructions configured to enable a device for image processing to execute all or part of the method in each embodiment of the disclosure. The embodiments of the disclosure are not limited to any specific hardware and software combination.

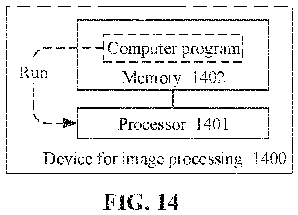

FIG. 14 is a schematic diagram of a hardware entity of a device for image processing according to an embodiment of the disclosure. As shown in FIG. 14, the hardware entity of the device 1400 for image processing includes: a processor 1401 and a memory 1402. The memory 1402 stores a computer program capable of running on the processor 1401. The processor 1401 executes the program to implement the operations in the method of any of the abovementioned embodiments.

The memory 1402 stores a computer program capable of running on a processor. The memory 1402 is configured to store an instruction and an application capable of being executed by the processor 1401, and may also cache data (for example, image data, audio data, voice communication data, and video communication data) to be processed or have been processed by the processor 1401 and each module in the device 1400 for image processing, and may be implemented by a flash or a Random Access Memory (RAM).

The processor 1401 executes the program to implement the operations of any one of the abovementioned methods for image processing. The processor 1401 generally controls overall operations of the device 1400 for image processing.

An embodiment of the disclosure provides a computer storage medium. The computer storage medium stores one or more programs. The one or more programs may be executed by one or more processors to execute to implement the operations of the method for image processing of any one of the above embodiments.

An embodiment of the disclosure provides a computer program product. The computer program product carries a program code, and the instruction included in the program code may be configured to execute the operations of the method for image processing of any of the abovementioned embodiments.

An embodiment of the disclosure provides a computer program, which includes a computer-readable code. A processor in the device for image processing executes the operations of the method for image processing of any of the abovementioned embodiments in a case where the computer-readable code runs in the device for image processing.

It should be pointed out here that the above descriptions about the embodiments of the computer storage medium, the device for image processing, the computer program product and the computer program are similar to those about the abovementioned method embodiment and beneficial effects similar to those of the method embodiment are achieved. Technical details undisclosed in the embodiments of the computer storage medium, the device for image processing, the computer program product, and the computer program of the disclosure are understood with reference to the description of the method embodiment of the disclosure.

The abovementioned processor may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing unit (CPU), a Graphics Processing Unit (GPU), an embedded Neural-Network Processing units (NPU), a controller, a microcontroller, or a microprocessor. It can be understood that other electronic devices may also be configured to realize functions of the processor, which is not limited in the embodiments of the disclosure.

The abovementioned computer storage medium/memory may be a memory such as a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory a compact disc, or a Compact Disc Read-Only Memory (CD-ROM), or may be various devices for image processing including one of the abovementioned memories or any combination of the abovementioned memories, such as a mobile phone, a computer, a tablet device, and a personal digital assistant.

The processor or the apparatus for image processing of the embodiments of the disclosure may be an integrated circuit chip having signal processing capability. In the implementation process, each operation of the abovementioned method embodiment may be completed by an integrated logic circuit of hardware in the processor or an instruction in the form of software. The abovementioned processor may be a general-purpose processor, a DSP, an ASIC, an FPGA, or other programmable logic devices, discrete gate or transistor logic devices, and discrete hardware components. The processor can implement or execute the methods, operations, and logical block diagrams disclosed in the embodiments of this disclosure. The general-purpose processor may be a microprocessor, or the processor may also be any conventional processor or the like. The operations of the method disclosed with reference to the embodiments of this disclosure may be directly executed and completed by a hardware decoding processor, or executed and completed by a combination of hardware and software modules in a decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the operations in the foregoing methods in combination with hardware of the processor.

It is to be understood that "one embodiment" or "an embodiment" or "the embodiment of the disclosure" or "the foregoing embodiment" or "some implementation" or "some embodiments" throughout the specification means that specific features, structures or characteristics related to the embodiments are included in at least one embodiment of the disclosure. Therefore, "in one embodiment" or "in an embodiment" or "the embodiment of the disclosure" or "the forgoing embodiment" or "some implementation modes" or "some embodiments" appearing everywhere in the whole specification does not always refer to the same embodiment. In addition, these specified features, structures, or characteristics may be combined in one or more embodiments in any appropriate manner. It should be understood that, in each embodiment of the disclosure, a magnitude of a sequence number of each process does not mean an execution sequence and the execution sequence of the process should be determined by its function and an internal logic and should not form any limit to an implementation process of the embodiments of the disclosure. The abovementioned sequence numbers of the embodiments of the disclosure are adopted not to represent superiority-inferiority of the embodiments but only for description.

If not specified, when the device for image processing executes any step in the embodiments of the disclosure, the processor of the device for image processing executes the operation. Unless otherwise specified, an execution sequence of the following operations by the device for image processing is not limited in the embodiments of the disclosure. In addition, the same method or different methods may be used to process data in different embodiments. It is also to be noted that any operation in the embodiments of the disclosure may be executed independently by the device for image processing, namely the device for image processing may execute any operation in the abovementioned embodiments independent of execution of the other operations.

In some embodiments provided by the disclosure, it is to be understood that the disclosed device and method may be implemented in other modes. The device embodiment described above is only schematic, and for example, division of the units is only logic function division, and other division manners may be used during practical implementation. For example, a plurality of units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The abovementioned units described as separate parts may be or may not be physically separated, and the parts shown as units may be or may not be physical elements. That is, the units may be located in one place or distributed to a plurality of network elements. A part or all of the units may be selected to achieve the objectives of the solutions of the embodiments according to practical requirements.

In addition, function units in each embodiment of the disclosure may be integrated into a processing unit, each unit may also serve as an independent unit, and two or more than two units may also be integrated into a unit. The integrated unit may be implemented in a hardware form and may also be implemented in form of hardware and software function unit.

The methods disclosed in some method embodiments provided in the disclosure may be freely combined without conflicts to obtain new method embodiments.

The characteristics disclosed in several product embodiments provided in the disclosure may be freely combined without conflicts to obtain new product embodiments.

The characteristics disclosed in several method or device embodiments provided in the disclosure may be freely combined without conflicts to obtain new method embodiments or device embodiments.

Those of ordinary skill in the art can understand that all or a part of the operations of the abovementioned method embodiments may be implemented by hardware related to a program instruction, and the forgoing program may be stored in a computer-readable storage medium. The program is executed to execute the operations of the abovementioned method embodiments. The forgoing storage medium includes: various media capable of storing program codes such as a mobile storage device, a ROM, a magnetic disc, or a compact disc.

Alternatively, when implemented in form of software function module and sold or used as an independent product, the abovementioned integrated unit of the disclosure may also be stored in a computer-readable storage medium. Based on such an understanding, a substantial part of the technical solutions of the embodiments of the disclosure substantially or parts thereof making contributions to the related art may be embodied in form of a software product. The computer software product is stored in a storage medium, including a plurality of instructions configured to cause a computer device (which may be a personal computer, a server, a network device or the like) to execute all or part of the method in each embodiment of the disclosure. The foregoing storage medium includes: various media capable of storing program codes, such as a mobile storage device, the ROM, a magnetic disc, or a compact disc.

Singular forms "a/an", "said", and "the" used in the embodiments and appended claims of the disclosure are also intended to include plural forms unless other meanings are clearly expressed in the context.

It is to be understood that term "and/or" used in the disclosure is only an association relationship describing associated objects and represents that three relationships may exist. For example, A and/or B may represent three conditions: independent existence of A, existence of both A and B and independent existence of B. In addition, the character "/" herein generally indicates that the contextual objects are in an "or" relationship.

It is to be noted that, in each embodiment involved in the disclosure, all the operations may be executed or part of the operations may be executed if a complete technical solutions may be formed.

[**00299]** The above-mentioned descriptions are only implementation manners of the disclosure, but are not intended to limit the protection scope of the disclosure. Any variation or replacement readily figured out by a person skilled in the art within the technical scope disclosed in this disclosure shall fall within the protection scope of this disclosure. Therefore, the scope of the protection of the disclosure shall be subject to the scope of protection of the claims.

## Claims

1. A method for image processing, comprising:
determining a pixel position of a target part and a pixel position of an occluded area in the target part based on an image to be processed;
determining a pixel position of a non-occluded area in the target part based on the pixel position of the target part and the pixel position of the occluded area in the target part; and
performing rendering processing on the non-occluded area based on the pixel position of the non-occluded area in the target part.

2. The method of claim 1, wherein the determining the pixel position of the target part based on the image to be processed comprises:
performing key point detection on the image to be processed to obtain key point information of the target part; and
determining the pixel position of the target part based on the key point information of the target part.

3. The method of claim 1 or 2, wherein the determining the pixel position of the occluded area in the target part based on the image to be processed comprises:
determining the pixel position of the occluded area in the target part based on an image segmentation model and the image to be processed.

4. The method of claim 3, wherein the determining the pixel position of the occluded area in the target part based on the image segmentation model and the image to be processed comprises:
determining a segmentation image comprising the target part based on the image to be processed;
determining a target image inputted into the image segmentation model based on the segmentation image;
processing the target image by using the image segmentation model, to obtain an output image; and
determining the pixel position of the occluded area in the target part based on the output image.

5. The method of claim 4, wherein the determining the segmentation image comprising the target part based on the image to be processed comprises:
determining an affine-transformed image based on the image to be processed and an affine transformation matrix;
segmenting the affine-transformed image to obtain the segmentation image; and
the determining the pixel position of the occluded area in the target part based on the output image comprises:
determining the pixel position of the occluded area in the target part based on the output image and the affine transformation matrix.

6. The method of claim 4 or 5, wherein the output image comprises a target matrix having a same number of rows and a same number of columns as pixels of the target image or the segmentation image, an element value of each element in the target matrix characterizes a probability that a pixel corresponding to the element belongs to the target part or a non-target part;
the determining the pixel position of the occluded area in the target part based on the output image comprises:
determining the element value of each element in the target matrix as an element value corresponding to a respective pixel in the segmentation image; and
determining the pixel position of the occluded area in the target part based on the element value corresponding to each pixel in the segmentation image and the affine transformation matrix.

7. The method of claim 6, wherein the determining the pixel position of the occluded area in the target part based on the element value corresponding to each pixel in the segmentation image and the affine transformation matrix comprises:
determining the element value corresponding to each pixel in a local image, including the target part, corresponding to the segmentation image in the image to be processed based on the element value corresponding to each pixel in the segmentation image and the affine transformation matrix; and
determining the pixel position of the occluded area in the target part based on the element value corresponding to each pixel in the local image.

8. The method of claim 7, wherein the determining the pixel position of the occluded area in the target part based on the element value corresponding to each pixel in the local image comprises:
determining a target element value meeting a first threshold value condition from the element value corresponding to each pixel in the local image at the pixel position of the target part;
determining a pixel position of a second specified pixel in the image to be processed, wherein the second specified pixel corresponds to a first specified pixel in the local image; and
determining the pixel position of the occluded area in the target part based on the pixel position of the target element value corresponding to the local image and the pixel position of the second specified pixel.

9. The method of claim 7, wherein the determining the pixel position of the occluded area in the target part based on the element value corresponding to each pixel in the local image comprises:
determining an element value corresponding to each pixel in a specified area other than the local image in the image to be processed;
determining a specified element value meeting the first threshold value condition from the element value corresponding to each pixel in the specified area and the element value of each pixel in the local image at the pixel position of the target part; and
determining the pixel position of the occluded area in the target part based on the pixel position of the specified element value corresponding to the image to be processed.

10. The method of any one of claims 4 to 9, further comprising: determining the element value corresponding to each pixel at the pixel position of the target part based on the output image, wherein
the determining the pixel position of the non-occluded area in the target part based on the pixel position of the target part and the pixel position of the occluded area in the target part comprises:
determining a candidate element value meeting a second threshold value condition in the element value corresponding to each pixel at the pixel position of the target part;
determining a pixel position corresponding to the candidate element value as a pixel position of a transition area; and
determining the pixel position of the non-occluded area in the target part based on the pixel position of the occluded area in the target part and the pixel position of the transition area.

11. The method of claim 10, further comprising:
performing smoothing processing on the transition area based on the pixel position of the transition area.

12. The method of any one of claims 3 to 11, wherein the image segmentation model is obtained by training a training sample set and a target sample set, the training sample set comprises a plurality of training sample images, at least one part of each of the training sample images is occluded, and the target sample set comprises a plurality of target sample images, and each of the target sample images comprises a mask of an non-occluded area in the part.

13. The method of claim 12, wherein the training sample set is obtained by randomly occluding an occlusion of each occlusion image in an occlusion image set on at least one non-occluded part of each segmentation image in a segmentation image set; and
the target sample set is determined based on a position of the occlusion in each occlusion image relative to the at least one non-occluded part.

14. The method of claim 12, wherein the target sample set is determined based on a non-occluded area in the at least one part of each of the training sample images; and
the non-occluded area in the at least one part of each of the training sample images is determined based on an occlusion area of the training sample image and the key point information of the at least one part in the training sample image.

15. An apparatus for image processing, comprising:
a first determination portion configured to determine a pixel position of a target part and a pixel position of an occluded area in the target part based on an image to be processed;
a second determination portion configured to determine a pixel position of a target part and a pixel position of an occluded area in the target part based on an image to be processed; and
a rendering portion configured to perform rendering processing on a non-occluded area in the target part based on a pixel position of the non-occluded area in the target part.

16. A device for image processing, comprising: a memory and a processor, wherein
the memory stores a computer program capable of running on the processor, and
the processor, when executing the computer program, implements the operations in the method of any one of claims 1 to 14.

17. A computer storage medium, wherein the computer storage medium stores one or more programs which, when executed by the one or more processors, implement the operations in the method of any one of claims 1 to 14.

18. A computer program product, wherein the computer program product carries a program code containing instructions which are configured to execute the operations in the method of any one of claims 1 to 14.

19. A computer program comprising a computer-readable code which, when running in a device for image processing, enables the device for image processing to execute the operations in the method of any one of claims 1 to 14.
